# EUROPEAN PATENT SPECIFICATION

(11) **EP 2 698 911 B1**
(45) Date of publication and mention of the grant of the patent: **21.08.2019**
(21) Application number: 12866404.2
(22) Date of filing: 11.12.2012
(51) Int. Cl.: H02M 7/487

(54) **POWER ELECTRONIC CIRCUIT**
ELEKTRONISCHER STROMKREIS
CIRCUIT ÉLECTRONIQUE DE PUISSANCE

(30) Priority: 25.05.2012 CN 201210166619
(43) Date of publication of application: 19.02.2014
(73) Proprietor: Huawei Technologies Co., Ltd., Longgang District Shenzhen, Guangdong 518129 (CN)
(72) Inventor: ZHANG, Tao, Shenzhen, Guangdong 518129 (CN); LIU, Kelei, Shenzhen, Guangdong 518129 (CN); LI, Junlin, Shenzhen, Guangdong 518129 (CN)
(74) Representative: Thun, Clemens
(86) International application number: PCT/CN2012/086364
(87) International publication number: WO 2013/174127

(56) References cited:
- EP-A1- 2 372 893
- EP-A2- 2 306 629
- CN-A- 102 005 958
- CN-A- 102 035 420
- CN-A- 102 075 106
- CN-A- 102 694 479
- JP-A- 2012 253 981
- US-A1- 2011 115 532
- BERNET S ET AL: "The Active NPC Converter and Its Loss-Balancing Control", IEEE TRANSACTIONS ON INDUSTRIAL ELECTRONICS, IEEE SERVICE CENTER, PISCATAWAY, NJ, USA, vol. 52, no. 3, 1 June 2005 (2005-06-01), pages 855-868, XP011133065, ISSN: 0278-0046, DOI: 10.1109/TIE.2005.847586

## Description

### TECHNICAL FIELD

The present invention relates to the field of power electronic technologies, and in particular, to a power electronic circuit.

### BACKGROUND

A power electronic circuit in the prior art, such as a three-level inverter, includes four switching transistors that are serial connected at a positive terminal and a negative terminal of a direct current bus a first switching transistor Q1, a second switching transistor Q2, a third switching transistor Q3, and a fourth switching transistor Q4. Each switching transistor has a drive control signal.

In a positive half cycle of output voltage of the inverter, the second switching transistor Q2 is controlled to keep on, and the fourth switching transistor Q4 is controlled to keep off; and the first switching transistor Q1 and the third switching transistor Q3 are turned on in a complementary SPWM mode, with a dead time ensured between them.

In a negative half cycle of the output voltage, the third switching transistor Q3 is controlled to keep on, and the first switching transistor Q1 is controlled to keep off; and the fourth switching transistor Q4 and the second switching transistor Q2 are turned on in a complementary SPWM mode, with a dead time ensured between them.

In the diode clamp three-level inverter in the prior art, 3 main charging paths of the junction capacitor of the switching transistors exist at the same time no matter whether the output voltage is in the positive half cycle or the negative half cycle.

One of the charging paths relates to 3 serial connected switching transistors, and the loop path is long. Therefore, the reverse recovery feature of an anti-parallel diode of the first switching transistor Q1 imposes a great impact on the voltage peak of the third switching transistor Q3.
For example, US 2011/0115532 A1 refers to a multilevel converter operation. In particular, a NPC converter includes at least two legs, each leg comprising first and second top switches connected in series at a first mid point. The converter further includes first and second bottom switches connected in series at a second mid point, and first and second middle switches connected in series at a third mid point therebetween. The first top and second bottom switches are connected in series at a DC link and the first and the second middle switches are connected between the first and the second mid points. Each of the top, bottom and middle switches has an antiparallel diode thereacross. The method includes alternately switching the first and second top switches to ON state when the first middle switch is in ON state and the second middle switch is in OFF state.; The method also includes alternately switching the first and the second bottom switches to ON state when the first middle switch is in OFF state and the second middle switch is in ON state.

Further, EP 2 306 629 A2 refers to a five-level converter and the converter, which has three DC terminals divided into two groups, generates five voltage levels from an input DC power source (BA1) having three different voltage levels including zero and randomly selectively outputs the five voltage levels, is constituted by first, second, and third arm pairs (QA1, QA2, QA3) constituted by combining in series two arms composed of semiconductor devices (Q1-Q6), and an AC switch (SW1) constituted by combining semiconductor devices. As a result, the generated loss is decreased by decreasing the number of elements through which a current passes with respect to that in the conventional converters, thereby enabling the increase in efficiency and reduction in cost of the device.

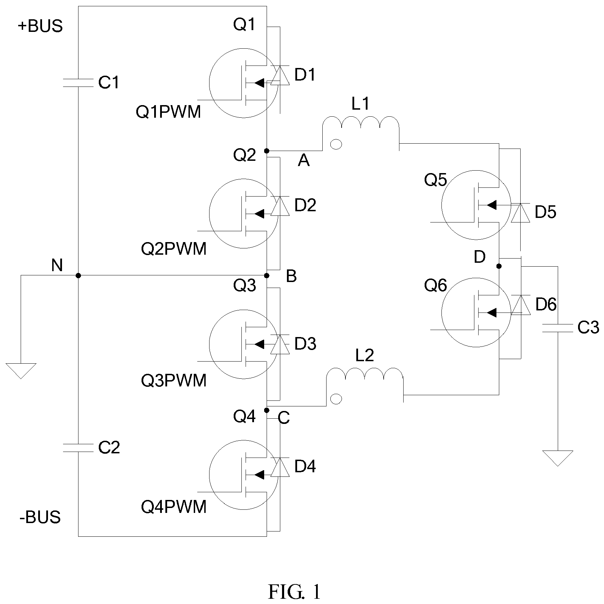

Further, EP 2 372 893 A1 refers to a multilevel inverter, wherein a converter comprises three DC inputs (INI, IN2, IN3) for receiving respectively three DC voltages (V1, V2, V3) wherein V1 > V2 > V3 , one AC output (OUT1) for delivering an AC voltage (Va), a set of at least six switching means (T1, T2, T3, T4, T5, T6) arranged in a symmetric pyramidal fashion as shown in Fig.1, and switch control means for controlling an ON/OFF state of each of the six switching means. The switch control means is configured in such a way that the top two switching means (T5,T6) are switched ON and OFF in a complementary fashion and exclusively at a fundamental frequency (Fa) of the AC voltage to be delivered at the AC output (OUT1), whereas at least some of the other four switching means (T1, T2, T3, T4) are switched ON and OFF at higher frequencies. The top two switching means (T5,T6) are hence subject to lower switching losses, thereby increasing the overall efficiency of the converter.

In the following description the term "embodiment" may have been used for subject-matter that is not part of the invention as defined by the appended claims. Only those examples that comprise all the features of the independent claims are part of the invention and thus embodiments of the invention. Parts of the subject-matter of the description not covered by the claims constitutes background art or examples useful for understanding the invention.

### SUMMARY

The objectives of the present invention are to provide a power electronic circuit to avoid long charging and discharging paths of the junction capacitor of the switching transistors.

The present invention provides a power electronic circuit, including a first switching transistor, a second switching transistor, a third switching transistor, a fourth switching transistor, a fifth switching transistor, a sixth switching transistor, a first capacitor, a second capacitor, a first inductor, and a second inductor;

The first capacitor and the second capacitor are serial connected between an input positive bus and an input negative bus, where the first capacitor and the second capacitor are connected to a fifth node;

The first switching transistor, the second switching transistor, the third switching transistor, and the fourth switching transistor are serial connected between the input positive bus and the input negative bus;

The first switching transistor and the second switching transistor are connected to a first node, the second switching transistor and the third switching transistor are connected to a second node, and the third switching transistor and the fourth switching transistor are connected to a third node; the fifth switching transistor and the sixth switching transistor are connected to a fourth node, the fifth switching transistor is connected to the first node through the first inductor, and the sixth switching transistor is connected to the third node through the second inductor; and

The second node is connected to the fifth node, wherein the power electronic circuit further comprises a seventh diode and an eighth diode; an anode of the seventh diode is connected to a common terminal of the first inductor and the fifth switching transistor, and a cathode of the seventh diode is connected to the input positive bus; and an anode of the eighth diode is connected to the input positive bus, and a cathode of the eighth diode is connected to a common terminal of the second inductor and the sixth switching transistor.

The present invention provides a method for controlling a power electronic circuit, and, when applied to an inverter, the method includes: a second switching transistor and a third switching transistor remain in a same state;
in a positive half cycle of output voltage of the inverter, a first switching transistor and a second switching transistor are complementarily in an on state and in an off state, a fifth switching transistor keeps on, and a fourth switching transistor and a sixth switching transistor keep off; and
in a negative half cycle of the output voltage of the inverter, the third switching transistor and the fourth switching transistor are complementarily in an on state and in an off state, the sixth switching transistor keeps on, and the first switching transistor and the fifth switching transistor keep off.

The present invention provides a method for controlling a power electronic circuit, and, when applied to an inverter, the method includes: in a positive half cycle of output voltage of the inverter, a first switching transistor and a second switching transistor are complementarily in an on state and in an off state, a third switching transistor keeps on, a fifth switching transistor keeps on, and a fourth switching transistor and a sixth switching transistor keep off; and
in a negative half cycle of the output voltage of the inverter, the third switching transistor and the fourth switching transistor are complementarily in an on state and in an off state, the second switching transistor keeps on, the sixth switching transistor keeps on, and the first switching transistor and the fifth switching transistor keep off.

According to specific embodiments provided in the present invention, the present invention discloses the following technical effects:

In the power electronic circuit disclosed in the embodiments of the present invention, a public node of the second switching transistor and the third switching transistor-the second node is always clamped at the electric level of node N (the fifth node), and therefore, the charging and the discharging of the junction capacitor of the first switching transistor and the second switching transistor are performed in a loop formed by the first
capacitor, the first switching transistor, and the second switching transistor, without involving the third switching transistor. The switching operations of the fifth switching transistor and the sixth switching transistor are performed according to a power frequency switching cycle, that is, performed once every half cycle of output voltage, without high frequency switching. Therefore, the power electronic circuit in the embodiments of the present invention avoids long charging and discharging paths of the junction capacitor of the switching transistors.

### BRIEF DESCRIPTION OF DRAWINGS

FIG. 1 is a structural diagram of a power electronic circuit according to a first embodiment of the present invention;
FIG. 2 is a control logic diagram of applying a power electronic circuit disclosed in a first embodiment of the present invention to an inverter;
FIG. 3 is a structural diagram of a power electronic circuit according to a second embodiment of the present invention;
FIG. 4 is a first control logic diagram of applying a power electronic circuit disclosed in a second embodiment of the present invention to an inverter;
FIG. 5 is a second control logic diagram of applying a power electronic circuit disclosed in a second embodiment of the present invention to an inverter;
FIG. 6 is a third control logic diagram of applying a power electronic circuit disclosed in a second embodiment of the present invention to an inverter;
FIG. 7 is a structural diagram of a power electronic circuit according to a third embodiment of the present invention; and
FIG. 8 is a structural diagram of a power electronic circuit according to a fourth embodiment of the present invention.

### DESCRIPTION OF EMBODIMENTS

To make the above objective, characteristics, and advantages of the present invention clearer to understand, the following describes the present invention in detail with reference to the accompanying drawings and specific embodiments.

Therefore, the objectives of the present invention are to provide a power electronic circuit to avoid long charging and discharging paths of the junction capacitor of the switching transistors.

FIG. 1 is a structural diagram of a power electronic circuit according to a first embodiment of the present invention.

The power electronic circuit in the first embodiment of the present invention includes a first switching transistor Q1, a second switching transistor Q2, a third switching transistor Q3, a fourth switching transistor Q4, a fifth switching transistor Q5, a sixth switching transistor Q6, a first inductor L1, and a second inductor L2.

The first switching transistor Q1 is connected to an input positive bus (which may be specifically a positive terminal +BUS of a direct current bus in FIG. 1) and a first node A; the second switching transistor Q2 is connected to the first node A and a second node B; the third switching transistor Q3 is connected to the second node B and a third node C; the fourth switching transistor Q4 is connected to the third node C and an input negative bus (which may be specifically a negative terminal -BUS of the direct current bus in FIG. 1); the fifth switching transistor Q5 is connected to a fourth node D, and is connected to the first node A through the first inductor L1; and the sixth switching transistor Q6 is connected to the fourth node D, and is connected to the third node C through the second inductor L2.

A first capacitor C1 and a second capacitor C2 are serial connected between the positive terminal +BUS of the direct current bus and the negative terminal -BUS of the direct current bus, and a public node between the first capacitor C1 and the second capacitor C2 is a fifth node N (that is, a midpoint of the direct current bus); and the second node B is connected to the fifth node N.

The first switching transistor Q1, the second switching transistor Q2, the third switching transistor Q3, the fourth switching transistor Q4, the fifth switching transistor Q5, and the sixth switching transistor Q6 may be IGBT transistors, or MOS transistors, or SCR transistors (thyristor). The switching transistors described in the embodiment of the present invention may be any device that implements the function of switching.

The fourth node may be further connected to an output filter capacitor C3.

If the first switching transistor Q1, the second switching transistor Q2, the third switching transistor Q3, the fourth switching transistor Q4, the fifth switching transistor Q5, and the sixth switching transistor Q6 are MOS transistors, the drain of the first switching transistor Q1 and the drain of the second switching transistor Q2 are connected to the first node; the drain of the second switching transistor Q2 and the drain of the third switching transistor Q3 are connected to the second node; the drain of the third switching transistor Q3 and the drain of the fourth switching transistor Q4 are connected to the third node; and the drain of the fifth switching transistor Q5 and the drain of the sixth switching transistor Q6 are connected to the fourth node.

If the first switching transistor Q1, the second switching transistor Q2, the third switching transistor Q3, the fourth switching transistor Q4, the fifth switching transistor Q5, and the sixth switching transistor Q6 are IGBT transistors, the emitter of the first switching transistor Q1 and the collector of the second switching transistor Q2 are connected to the first node; the emitter of the second switching transistor Q2 and the collector of the third switching transistor Q3 are connected to the second node; the emitter of the third switching transistor Q3 and the collector of the fourth switching transistor Q4 are connected to the third node; and the emitter of the fifth switching transistor Q5 and the collector of the sixth switching transistor Q6 are connected to the fourth node.

If the first switching transistor Q1, the second switching transistor Q2, the third switching transistor Q3, the fourth switching transistor Q4, the fifth switching transistor Q5, and the sixth switching transistor Q6 are SCR transistors, the cathode of the first switching transistor Q1 and the anode of the second switching transistor Q2 are connected to the first node; the cathode of the second switching transistor Q2 and the anode of the third switching transistor Q3 are connected to the second node; the cathode of the third switching transistor Q3 and the anode of the fourth switching transistor Q4 are connected to the third node; and the cathode of the fifth switching transistor Q5 and the anode of the sixth switching transistor Q6 are connected to the fourth node.

Further, the first switching transistor Q1 may be anti-parallel connected to a first diode D1, the second switching transistor Q2 may be anti-parallel connected to a second diode D2, the third switching transistor Q3 may be anti-parallel connected to a third diode D3, and the fourth switching transistor Q4 may be anti-parallel connected to a fourth diode D4.

If the first switching transistor Q1, the second switching transistor Q2, the third switching transistor Q3, the fourth switching transistor Q4, the fifth switching transistor Q5, and the sixth switching transistor Q6 are MOS transistors, the first diode may be anti-parallel connected between the drain and the drain of the first switching transistor, the second diode may be anti-parallel connected between the drain and the drain of the second switching transistor, the third diode may be anti-parallel connected between the drain and the drain of the third switching transistor, and the fourth diode may be anti-parallel connected between the drain and the drain of the fourth switching transistor.

If the first switching transistor Q1, the second switching transistor Q2, the third switching transistor Q3, the fourth switching transistor Q4, the fifth switching transistor Q5, and the sixth switching transistor Q6 are IGBT transistors, the first diode may be anti-parallel connected between the emitter and the collector of the first switching transistor, the second diode may be anti-parallel connected between the emitter and the collector of the second switching transistor, the third diode may be anti-parallel connected between the emitter and the collector of the third switching transistor, and the fourth diode may be anti-parallel connected between the emitter and the collector of the fourth switching transistor.

If the first switching transistor Q1, the second switching transistor Q2, the third switching transistor Q3, the fourth switching transistor Q4, the fifth switching transistor Q5, and the sixth switching transistor Q6 are SCR transistors, the first diode may be anti-parallel connected between the cathode and the anode of the first switching transistor, the second diode may be anti-parallel connected between the cathode and the anode of the second switching transistor, the third diode may be anti-parallel connected between the cathode and the anode of the third switching transistor, and the fourth diode may be anti-parallel connected between the cathode and the anode of the fourth switching transistor.

In the power electronic circuit disclosed in the first embodiment of the present invention, a public node of the second switching transistor Q2 and the third switching transistor Q3 - the second node B is always clamped at the electric level of node N (the fifth node), and therefore, the charging and the discharging of the junction capacitor of the first switching transistor Q1 and the second switching transistor Q2 are performed in a loop formed by the first capacitor C1, the first switching transistor Q1, and the second switching transistor Q2, without involving the third switching transistor Q3. The switching operations of the fifth switching transistor Q5 and the sixth switching transistor Q6 are performed according to a power frequency switching cycle, that is, performed once every half cycle of output voltage, without high frequency switching. Therefore, the power electronic circuit in the first embodiment of the present invention avoids long charging and discharging paths of the junction capacitor of the switching transistors.

In the power electronic circuit in the first embodiment of the present invention, the first switching transistor Q1, the second switching transistor Q2, the third switching transistor Q3, and the fourth switching transistor Q4 all each has a discharging path, and therefore, the voltage is equally shared between the first switching transistor Q1 and the second switching transistor Q2, or between the third switching transistor Q3 and the fourth switching transistor Q4.

The power electronic circuit in the first embodiment of the present invention is applicable to an inverter, and an alternating current load may be connected between the bus midpoint (that is, the fifth node) and the fourth node.

The power electronic circuit in the first embodiment of the present invention is applicable to a charger, and a rechargeable battery may be connected between the bus midpoint (that is, the fifth node) and the fourth node.

The power electronic circuit in the first embodiment of the present invention is applicable to a boost circuit, and an input power supply of the boost circuit may be connected between the bus midpoint (that is, the fifth node) and the fourth node.

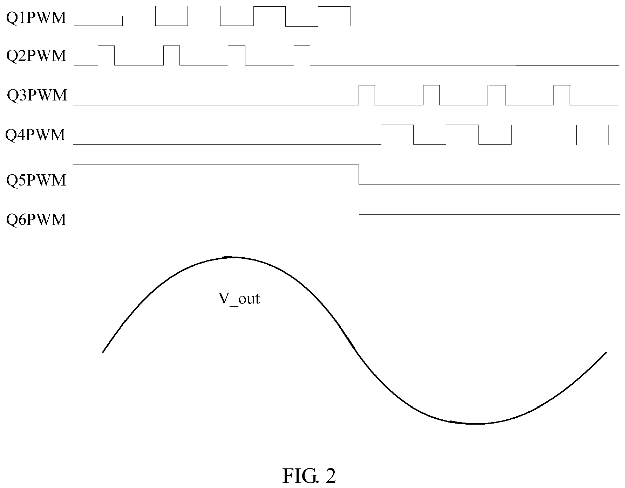

FIG. 2 is a control logic diagram of applying a power electronic circuit disclosed in a first embodiment of the present invention to an inverter.

A method for controlling a power electronic circuit disclosed in the first embodiment is provided, and, when applied to an inverter, the method includes: in a positive half cycle of output voltage (more precisely, the voltage on the output filter capacitor C3) of the inverter, the first switching transistor Q1 and the second switching transistor Q2 are complementarily in an on state and in an off state, the fifth switching transistor Q5 keeps on, and the third, fourth, and sixth switching transistors Q3, Q4, and Q6 keep off; and in a negative half cycle of the output voltage of the inverter, the third switching transistor Q3 and the fourth switching transistor Q4 are complementarily in an on state and in an off state, the sixth switching transistor Q6 keeps on, and the first, second and fifth switching transistors Q1, Q2, and Q5 keep off.

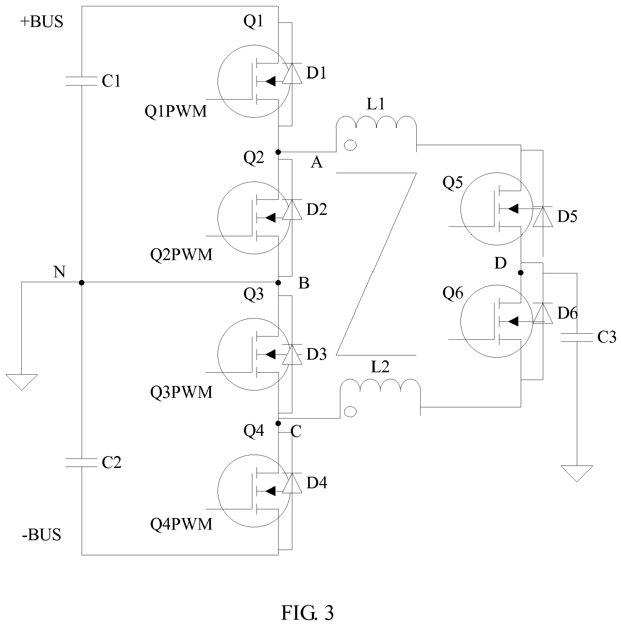

FIG. 3 is a structural diagram of a power electronic circuit according to a second embodiment of the present invention.

The power electronic circuit in the second embodiment of the present invention differs from the first embodiment in that the first inductor L1 is coupled with the second inductor L2.

The first inductor L1 and the second inductor L2 of the power electronic circuit in the second embodiment of the present invention are in a structure in which they are coupled together.

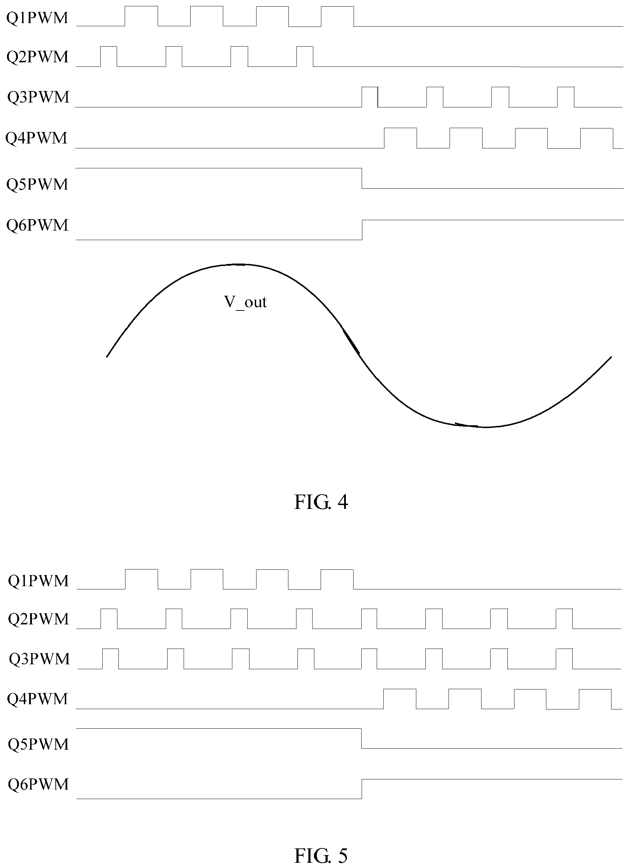

FIG. 4 is a first control logic diagram of applying a power electronic circuit disclosed in the second embodiment of the present invention to an inverter.

The first control logic for applying a power electronic circuit disclosed in the second embodiment of the present invention to an inverter is a method for controlling the power electronic circuit disclosed in the second embodiment. When the method is applied to an inverter, the first control logic is the same as the control logic shown in FIG. 2.

The first control logic for applying the power electronic circuit disclosed in the second embodiment of the present invention to an inverter is: in a positive half cycle of output voltage of the inverter, the first switching transistor Q1 and the second switching transistor Q2 are complementarily in an on state and in an off state, the fifth switching transistor Q5 keeps on, and the third, fourth, and sixth switching transistors Q3, Q4 and Q6 keep off; and in a negative half cycle of the output voltage of the inverter, the third switching transistor Q3 and the fourth switching transistor Q4 are complementarily in an on state and in an off state, the sixth switching transistor Q6 keeps on, and the first, second and fifth switching transistors Q1, Q2, and Q5 keep off.

FIG. 5 is a second control logic diagram of applying a power electronic circuit disclosed in the second embodiment of the present invention to an inverter.

The second control logic of applying the power electronic circuit disclosed in the second embodiment of the present invention to an inverter, differs from the first control logic shown in FIG. 4, in that the second switching transistor and the third switching transistor employ the same drive control signal.

The second control logic for applying a power electronic circuit disclosed in the second embodiment of the present invention to an inverter is a method for controlling the power electronic circuit disclosed in the second embodiment. When the method is applied to an inverter, the second control logic is specifically as follows:

the second switching transistor Q2 and the third switching transistor Q3 remain in a same state;

In a positive half cycle of output voltage of the inverter, the first switching transistor Q1 and the second switching transistor Q2 are complementarily in an on state and in an off state, the fifth switching transistor Q5 keeps on, and the fourth switching transistor Q4 and the sixth switching transistor Q6 keep off;

In a negative half cycle of the output voltage of the inverter, the third switching transistor Q3 and the fourth switching transistor Q4 are complementarily in an on state and in an off state, the sixth switching transistor Q6 keeps on, and the first switching transistor Q1 and the fifth switching transistor Q5 keep off.

In the second control logic of applying the power electronic circuit disclosed in the second embodiment of the present invention to an inverter, 5 drive signals are used, which saves one drive signal compared with the first control logic shown in FIG. 4, and hence saves control resources.

In the second control logic for applying the power electronic circuit disclosed in the second embodiment of the present invention to an inverter, due to a coupling effect of the first inductor L1 and the second inductor L2, when the inductor current free-wheels forward, two free-wheeling paths exist; one path is to flow through the second switching transistor Q2 to the first inductor L1, the fifth switching transistor Q5, the third capacitor C, and the second switching transistor for free-wheeling, and the other path is to flow through the third switching transistor Q3 to the second inductor L2, the sixth switching transistor Q6, the third capacitor C, and the third switching transistor Q3 for free-wheeling, thereby reducing line impedance. Therefore, the second control logic is more efficient than the first control logic.

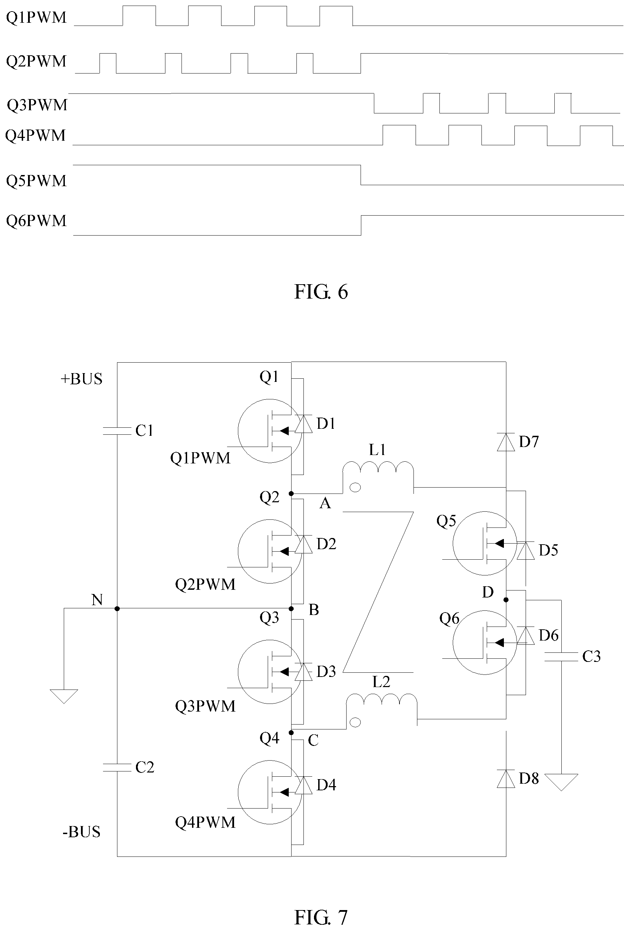

FIG. 6 is a third control logic diagram of applying a power electronic circuit disclosed in a second embodiment of the present invention to an inverter.

The third control logic of applying the power electronic circuit disclosed in the second embodiment of the present invention to an inverter, differs from the first control logic shown in FIG. 4, in that the third switching transistor employs a different drive control signal.

The third control logic for applying a power electronic circuit disclosed in the second embodiment of the present invention to an inverter is a method for controlling the power electronic circuit disclosed in the second embodiment. When the method is applied to an inverter, the third control logic is specifically as follows:

In a positive half cycle of output voltage of the inverter, the first switching transistor Q1 and the second switching transistor Q2 are complementarily in an on state and in an off state, the third switching transistor Q3 keeps on, and the fifth switching transistor Q5 keeps on, and the fourth switching transistor Q4 and the sixth switching transistor Q6 keep off;

In a negative half cycle of the output voltage, the third switching transistor Q3 and the fourth switching transistor Q4 are complementarily in an on state and in an off state, the second switching transistor Q2 keeps on, the sixth switching transistor Q6 keeps on, and the first switching transistor Q1 and the fifth switching transistor Q5 keep off.

Compared with the second control logic, the third control logic reduces the number of times of actuating the switching transistor in the same time period, and saves the switching loss of the second switching transistor and the third switching transistor.

Compared with the first control logic and the second control logic, the third control logic implements low line impedance in free-wheeling, and is free from switching loss on the free-wheeling line.

The power electronic circuit in the second embodiment of the present invention is applicable to an inverter, and the power electronic circuit further includes: an alternating current load is connected between the bus midpoint, that is, the fifth node N, and the fourth node D.

The power electronic circuit in the second embodiment of the present invention is applicable to a charger, and the power electronic circuit further includes: a rechargeable battery is connected between the bus midpoint, that is, the fifth node N, and the fourth node.

The power electronic circuit in the second embodiment of the present invention is applicable to a boost circuit, and the power electronic circuit further includes: an input power supply of the boost circuit is connected between the bus midpoint, that is, the fifth node N, and the fourth node.

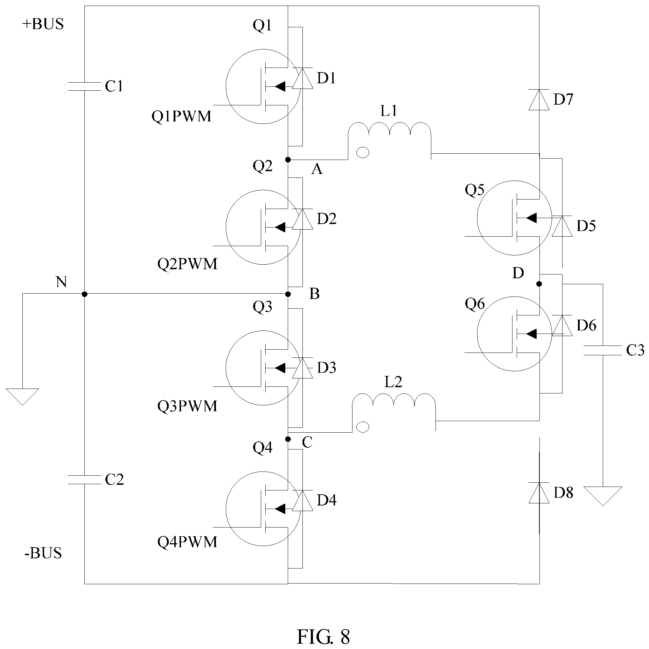

Referring to FIG. 7 and FIG. 8, FIG. 7 is a structural diagram of a power electronic circuit according to a third embodiment of the present invention; and FIG. 8 is a structural diagram of a power electronic circuit according to a fourth embodiment of the present invention.

The power electronic circuit in the third embodiment of the present invention is implemented by adding two diodes - a seventh diode D7 and an eighth diode D8 on the basis of the second embodiment.

The anode of the seventh diode D7 is connected to a common terminal of the first inductor L1 and the fifth switching transistor Q5, and the cathode of the seventh diode D7 is connected to an input positive bus (which may be specifically a positive terminal +BUS of the direct current bus shown in FIG. 7).

The anode of the eighth diode D8 is connected to an input negative bus (which may be specifically a negative terminal -BUS of the direct current bus shown in FIG. 7), and the cathode of the eighth diode D8 is connected to a common terminal of the second inductor L2 and the sixth switching transistor Q6.

The power electronic circuit in the third embodiment of the present invention is implemented by adding two diodes - a seventh diode D7 and an eighth diode D8 to protect the fifth switching transistor Q5 and the sixth switching transistor Q6 on the basis of the second embodiment.

The control logic for applying a power electronic circuit disclosed in the third embodiment of the present invention to an inverter may be the same as the control logic for applying a power electronic circuit disclosed in the second embodiment to an inverter.

The power electronic circuit in the fourth embodiment of the present invention is implemented by adding two diodes-a seventh diode D7 and an eighth diode D8 on the basis of the first embodiment.

The anode of the seventh diode D7 is connected to a common terminal of the first inductor L1 and the fifth switching transistor Q5, and the cathode of the seventh diode D7 is connected to an input positive bus (which may be specifically a positive terminal +BUS of the direct current bus shown in FIG. 7).

The anode of the eighth diode D8 is connected to an input negative bus (which may be specifically a negative terminal -BUS of the direct current bus shown in FIG. 7), and the cathode of the eighth diode D8 is connected to a common terminal of the second inductor L2 and the sixth switching transistor Q6.

The power electronic circuit in the fourth embodiment of the present invention is implemented by adding two diodes - a seventh diode D7 and an eighth diode D8 to protect the fifth switching transistor Q5 and the sixth switching transistor Q6 on the basis of the first embodiment.

The control logic for applying a power electronic circuit disclosed in the fourth embodiment of the present invention to an inverter may be the same as the control logic for applying a power electronic circuit disclosed in the first embodiment to an inverter.

## Claims

1. A power electronic circuit, comprising a first switching transistor (Q1), a second switching transistor (Q2), a third switching transistor (Q3), a fourth switching transistor (Q4), a fifth switching transistor (Q5), a sixth switching transistor (Q6), a first capacitor (C1), a second capacitor (C2), a first inductor (L1), and a second inductor (L2), wherein:
the first capacitor (L1) and the second capacitor (L2) are serial connected between an input positive bus (+BUS) and an input negative bus (-BUS), wherein the first capacitor (C1) and the second capacitor (C2) are connected to a fifth node (N);
the first switching transistor (Q1), the second switching transistor (Q2), the third switching transistor (Q3), and the fourth switching transistor (Q4) are serial connected between the input positive bus (+BUS) and the input negative bus (-BUS);
the first switching transistor (Q1) and the second switching transistor (Q2) are connected to a first node (A), the second switching transistor (Q2) and the third switching transistor (Q3) are connected to a second node (B), and the third switching transistor (Q3) and the fourth switching transistor (Q4) are connected to a third node (C); the fifth switching transistor (Q5) and the sixth switching transistor (Q6) are connected to a fourth node (D), the fifth switching transistor (Q5) is connected to the first node (A) through the first inductor (L1), and the sixth switching transistor (Q6) is connected to the third node (C) through the second inductor (L2); and
the second node (B) is connected to the fifth node (N),
**characterized in that**
the power electronic circuit further comprises a seventh diode (D7) and an eighth diode (D8);
an anode of the seventh diode (D7) is connected to a common terminal of the first inductor (L1) and the fifth switching transistor (Q5), and a cathode of the seventh diode (D7) is connected to the input positive bus (+BUS); and
an anode of the eighth diode (D8) is connected to the input positive bus (+BUS), and a cathode of the eighth diode (D8) is connected to a common terminal of the second inductor (L2) and the sixth switching transistor (Q6).

2. The power electronic circuit according to claim 1, wherein:
the first inductor (L1) is coupled with the second inductor (L2).

3. The power electronic circuit according to claim 1 or 2, wherein:
the first switching transistor (Q1) is anti-parallel connected to a first diode (D1), the second switching transistor (Q2) is anti-parallel connected to a second diode (D2), the third switching transistor (Q3) is anti-parallel connected to a third diode (D3), and the fourth switching transistor (Q4) is anti-parallel connected to a fourth diode (D4).

4. The power electronic circuit according to claim 1 or 2, wherein:
the fourth node (D) is connected to a filter capacitor (C3).

5. The power electronic circuit according to claim 1 or 2, wherein:
when applied to an inverter, the power electronic circuit further comprises: an alternating current load connected between the fifth node (N) and the fourth node (D).

6. The power electronic circuit according to claim 1 or 2, wherein:
when applied to a charger, the power electronic circuit further comprises: a rechargeable battery connected between the fifth node (N) and the fourth node (D).

7. The power electronic circuit according to claim 1 or 2, wherein:
when applied to a boost circuit, the power electronic circuit further comprises: an input power supply connected between the fifth node (N) and the fourth node (D).

8. The power electronic circuit according to claim 1 or 2, wherein:
the first switching transistor (Q1), the second switching transistor (Q2), the third switching transistor (Q3), the fourth switching transistor (Q4), the fifth switching transistor (Q5), and the sixth switching transistor (Q6) comprise IGBT transistors, or MOS transistors, or SCR transistors.

9. A method for controlling the power electronic circuit specified in claim 2, wherein: when applied to an inverter, the method comprises:
the second switching transistor (Q2) and the third switching transistor (Q3) remain in a same state;
in a positive half cycle of output voltage of the inverter, the first switching transistor (Q1) and the second switching transistor (Q2) are complementarily in an on state and in an off state, the fifth switching transistor (Q5) keeps on, and the fourth switching transistor (Q4) and the sixth switching transistor (Q6) keep off; and
in a negative half cycle of the output voltage of the inverter, the third switching transistor (Q3) and the fourth switching transistor (Q4) are complementarily in an on state and in an off state, the sixth switching transistor (Q6) keeps on, and the first switching transistor (Q1) and the fifth switching transistor (Q5) keep off.

10. A method for controlling the power electronic circuit specified in claim 2, wherein: when applied to an inverter, the method comprises:
in a positive half cycle of output voltage of the inverter, the first switching transistor (Q1) and the second switching transistor (Q2) are complementarily in an on state and in an off state, the third switching transistor (Q3) keeps on, the fifth switching transistor (Q5) keeps on, and the fourth switching transistor (Q4) and the sixth switching transistor (Q6) keep off; and
in a negative half cycle of the output voltage of the inverter, the third switching transistor (Q3) and the fourth switching transistor (Q4) are complementarily in an on state and in an off state, the second switching transistor (Q2) keeps on, the sixth switching transistor (Q6) keeps on, and the first switching transistor (Q1) and the fifth switching transistor (Q5) keep off.

## Patentansprüche

1. Elektronischer Stromkreis, welcher einen ersten Schalttransistor (Q1), einen zweiten Schalttransistor (Q2), einen dritten Schalttransistor (Q3), einen vierten Schalttransistor (Q4), einen fünften Schalttransistor (Q5), einen sechsten Schalttransistor (Q6), einen ersten Kondensator (C1), einen zweiten Kondensator (C2), einen ersten Induktor (L1) und einen zweiten Induktor (L2) umfasst, wobei:
der erste Kondensator (L1) und der zweite Kondensator (L2) seriell zwischen einem Positiv-Eingangsbus (+BUS) und einem Negativ-Eingangsbus (-BUS) angeschlossen sind, wobei der erste Kondensator (C1) und der zweite Kondensator (C2) an einen fünften Knoten (N) angeschlossen sind;
der erste Schalttransistor (Q1), der zweite Schalttransistor (Q2), der dritte Schalttransistor (Q3) und der vierte Schalttransistor (Q4) seriell zwischen dem Positiv-Eingangsbus (+BUS) und dem Negativ-Eingangsbus (-BUS) angeschlossen sind;
der erste Schalttransistor (Q1) und der zweite Schalttransistor (Q2) an einen ersten Knoten (A) angeschlossen sind, der zweite Schalttransistor (Q2) und der dritte Schalttransistor (Q3) an einen zweiten Knoten (B) angeschlossen sind, und der dritte Schalttransistor (Q3) und der vierte Schalttransistor (Q4) an einen dritten Knoten (C) angeschlossen sind; wobei der fünfte Schalttransistor (Q5) und der sechste Schalttransistor (Q6) an einen vierten Knoten (D) angeschlossen sind, der fünfte Schalttransistor (Q5) an den ersten Knoten (A) durch den ersten Induktor (L1) angeschlossen ist, und der sechste Schalttransistor (Q6) an den dritten Knoten (C) durch den zweiten Induktor (L2) angeschlossen ist; und
der zweite Knoten (B) an den fünften Knoten (N) angeschlossen ist,
**dadurch gekennzeichnet, dass**
der elektronische Stromkreis außerdem eine siebte Diode (D7) und eine achte Diode (D8) umfasst;
eine Anode der siebten Diode (D7) an eine gemeinsame Anschlussklemme des ersten Induktors (L1) und des fünften Schalttransistors (Q5) angeschlossen ist, und eine Kathode der siebten Diode (D7) an den Positiv-Eingangsbus (+BUS) angeschlossen ist;
eine Anode der achten Diode (D8) an den Positiv-Eingangsbus (+BUS) angeschlossen ist, und eine Kathode der achten Diode (D8) an eine gemeinsame Anschlussklemme des zweiten Induktors (L2) und des sechsten Schalttransistors (Q6) angeschlossen ist.

2. Elektronischer Stromkreis nach Anspruch 1, wobei:
der erste Induktor (L1) mit dem zweiten Induktor (L2) gekoppelt ist.

3. Elektronischer Stromkreis nach Anspruch 1 oder 2, wobei:
der erste Schalttransistor (Q1) mit einer ersten Diode (D1) antiparallel geschaltet ist, der zweite Schalttransistor (Q2) mit einer zweiten Diode (D2) antiparallel geschaltet ist, der dritte Schalttransistor (Q3) mit einer dritten Diode (D3) antiparallel geschaltet ist, und der vierte Schalttransistor (Q4) mit einer vierten Diode (D4) antiparallel geschaltet ist.

4. Elektronischer Stromkreis nach Anspruch 1 oder 2, wobei der vierte Knoten (D) an einen Filterkondensator (C3) angeschlossen ist.

5. Elektronischer Stromkreis nach Anspruch 1 oder 2, wobei:
der elektronische Stromkreis, wenn er bei einem Wechselrichter eingesetzt wird, außerdem Folgendes umfasst: einen Wechselstromverbraucher, der zwischen dem fünften Knoten (N) und dem vierten Knoten (D) angeschlossen ist.

6. Elektronischer Stromkreis nach Anspruch 1 oder 2, wobei:
der elektronische Stromkreis, wenn er bei einem Ladegerät eingesetzt wird, außerdem Folgendes umfasst: einen Akku, der zwischen dem fünften Knoten (N) und dem vierten Knoten (D) angeschlossen ist.

7. Elektronischer Stromkreis nach Anspruch 1 oder 2, wobei:
der elektronische Stromkreis, wenn er bei einer Boost-Schaltung eingesetzt wird, außerdem Folgendes umfasst: eine Eingangsstromversorgung, die zwischen dem fünften Knoten (N) und dem vierten Knoten (D) angeschlossen ist.

8. Elektronischer Stromkreis nach Anspruch 1 oder 2, wobei:
der erste Schalttransistor (Q1), der zweite Schalttransistor (Q2), der dritte Schalttransistor (Q3), der vierte Schalttransistor (Q4), der fünfte Schalttransistor (Q5) und der sechste Schalttransistor (Q6) IGBT-Transistoren oder MOS-Transistoren oder SCR-Transistoren umfassen.

9. Verfahren zum Steuern des in Anspruch 2 beschriebenen elektronischen Stromkreises, wobei:
das Verfahren, wenn es bei einem Wechselrichter eingesetzt wird, Folgendes umfasst:
der zweite Schalttransistor (Q2) und der dritte Schalttransistor (Q3) bleiben in einem selben Zustand;
der erste Schalttransistor (Q1) und der zweite Schalttransistor (Q2) befinden sich in einer positiven Halbwelle der Ausgangsspannung des Wechselrichters komplementär in einem Ein-Zustand und einem Aus-Zustand, der fünfte Schalttransistor (Q5) bleibt im Ein-Zustand und der vierte Schalttransistor (Q4) und der sechste Schalttransistor (Q6) bleiben im Aus-Zustand; und
der dritte Schalttransistor (Q3) und der vierte Schalttransistor (Q4) befinden sich in einer negativen Halbwelle der Ausgangsspannung des Wechselrichters komplementär in einem Ein-Zustand und einem Aus-Zustand, der sechste Schalttransistor (Q6) bleibt im Ein-Zustand und der erste Schalttransistor (Q1) und der fünfte Schalttransistor (Q5) bleiben im Aus-Zustand.

10. Verfahren zum Steuern des in Anspruch 2 beschriebenen elektronischen Stromkreises, wobei:
das Verfahren, wenn es bei einem Wechselrichter eingesetzt wird, Folgendes umfasst:
der erste Schalttransistor (Q1) und der zweite Schalttransistor (Q2) befinden sich in einer positiven Halbwelle der Ausgangsspannung des Wechselrichters komplementär in einem Ein-Zustand und einem Aus-Zustand, der dritte Schalttransistor (Q3) bleibt im Ein-Zustand, der fünfte Schalttransistor (Q5) bleibt im Ein-Zustand und der vierte Schalttransistor (Q4) und der sechste Schalttransistor (Q6) bleiben im Aus-Zustand; und
der dritte Schalttransistor (Q3) und der vierte Schalttransistor (Q4) befinden sich in einer negativen Halbwelle der Ausgangsspannung des Wechselrichters komplementär in einem Ein-Zustand und einem Aus-Zustand, der zweite Schalttransistor (Q2) bleibt im Ein-Zustand, der sechste Schalttransistor (Q6) bleibt im Ein-Zustand und der erste Schalttransistor (Q1) und der fünfte Schalttransistor (Q5) bleiben im Aus-Zustand.

## Revendications

1. Circuit électronique de puissance, comprenant un premier transistor de commutation (Q1), un deuxième transistor de commutation (Q2), un troisième transistor de commutation (Q3), un quatrième transistor de commutation (Q4), un cinquième transistor de commutation (Q5), un sixième transistor de commutation (Q6), un premier condensateur (C1), un deuxième condensateur (C2), une première inductance (L1) et une deuxième inductance (L2),
le premier condensateur (L1) et le deuxième condensateur (L2) étant connectés en série entre une ligne positive de bus d'entrée (+BUS) et une ligne négative de bus d'entrée (-BUS), le premier condensateur (C1) et le deuxième condensateur (C2) étant connectés à un cinquième noeud (N) ;
le premier transistor de commutation (Q1), le deuxième transistor de commutation (Q2), le troisième transistor de commutation (Q3) et le quatrième transistor de commutation (Q4) étant connectés en série entre la ligne positive de bus d'entrée (+BUS) et la ligne négative de bus d'entrée (-BUS) ;
le premier transistor de commutation (Q1) et le deuxième transistor de commutation (Q2) étant connectés à un premier noeud (A), le deuxième transistor de commutation (Q2) et le troisième transistor de commutation (Q3) étant connectés à un deuxième noeud (B), et le troisième transistor de commutation (Q3) et le quatrième transistor de commutation (Q4) étant connectés à un troisième noeud (C) ;
le cinquième transistor de commutation (Q5) et le sixième transistor de commutation (Q6) étant connectés à un quatrième noeud (D), le cinquième transistor de commutation (Q5) étant connecté au premier noeud (A) par la première inductance (L1), et le sixième transistor de commutation (Q6) étant connecté au troisième noeud (C) par la deuxième inductance (L2) ; et
le deuxième noeud (B) étant connecté au cinquième noeud (N),
**caractérisé en ce que**
le circuit électronique de puissance comprend en outre une septième diode (D7) et une huitième diode (D8) ;
une anode de la septième diode (D7) étant connectée à une borne commune de la première inductance (L1) et du cinquième transistor de commutation (Q5), et une cathode de la septième diode (D7) étant connectée à la ligne positive de bus d'entrée (+BUS) ; et
une anode de la huitième diode (D8) étant connectée à la ligne positive de bus d'entrée (+BUS) et une cathode de la huitième diode (D8) étant connectée à une borne commune de la deuxième inductance (L2) et du sixième transistor de commutation (Q6).

2. Circuit électronique de puissance selon la revendication 1,
la première inductance (L1) étant couplée à la deuxième inductance (L2).

3. Circuit électronique de puissance selon la revendication 1 ou 2,
le premier transistor de commutation (Q1) étant connecté en antiparallèle à une première diode (D1), le deuxième transistor de commutation (Q2) étant connecté en antiparallèle à une deuxième diode (D2), le troisième transistor de commutation (Q3) étant connecté en antiparallèle à une troisième diode (D3) et le quatrième transistor de commutation (Q4) étant connecté en antiparallèle à une quatrième diode (D4).

4. Circuit électronique de puissance selon la revendication 1 ou 2,
le quatrième noeud (D) étant connecté à un condensateur de filtrage (C3).

5. Circuit électronique de puissance selon la revendication 1 ou 2,
lorsqu'il est appliqué à un onduleur, le circuit électronique de puissance comprenant en outre :
une charge de courant alternatif connectée entre le cinquième noeud (N) et le quatrième noeud (D).

6. Circuit électronique de puissance selon la revendication 1 ou 2,
lorsqu'il est appliqué à un chargeur, le circuit électronique de puissance comprenant en outre :
une batterie rechargeable connectée entre le cinquième noeud (N) et le quatrième noeud (D).

7. Circuit électronique de puissance selon la revendication 1 ou 2,
lorsqu'il est appliqué à un circuit de suralimentation, le circuit électronique de puissance comprenant en outre :
une alimentation d'entrée connectée entre le cinquième noeud (N) et le quatrième noeud (D).

8. Circuit électronique de puissance selon la revendication 1 ou 2,
le premier transistor de commutation (Q1), le deuxième transistor de commutation (Q2), le troisième transistor de commutation (Q3), le quatrième transistor de commutation (Q4), le cinquième transistor de commutation (Q5) et le sixième transistor de commutation (Q6) comprenant des transistors IGBT ou transistors MOS ou transistors SCR.

9. Procédé de commande du circuit électronique de puissance spécifié dans la revendication 2,
lorsqu'il est appliqué à un onduleur, le procédé comprenant :
le deuxième transistor de commutation (Q2) et le troisième transistor de commutation (Q3) restant dans le même état ;
dans un demi-cycle positif de la tension de sortie de l'onduleur, le premier transistor de commutation (Q1) et le deuxième transistor de commutation (Q2) étant complémentaires dans un état marche et dans un état arrêt, le cinquième transistor de commutation (Q5) restant allumé et le quatrième transistor de commutation (Q4) et le sixième transistor de commutation (Q6) restant éteints ; et
dans un demi-cycle négatif de la tension de sortie de l'onduleur, le troisième transistor de commutation (Q3) et le quatrième transistor de commutation (Q4) étant complémentaires dans un état marche et dans un état arrêt, le sixième transistor de commutation (Q6) restant allumé et le premier transistor de commutation (Q1) et le cinquième transistor de commutation (Q5) restant éteints.

10. Procédé de commande du circuit électronique de puissance spécifié dans la revendication 2,
lorsqu'il est appliqué à un onduleur, le procédé comprenant :
dans un demi-cycle positif de la tension de sortie de l'onduleur, le premier transistor de commutation (Q1) et le deuxième transistor de commutation (Q2) étant complémentaires dans un état marche et dans un état arrêt, le troisième transistor de commutation (Q3) restant allumé, le cinquième transistor de commutation (Q5) restant allumé et le quatrième transistor de commutation (Q4) et le sixième transistor de commutation (Q6) restant éteints ; et
dans un demi-cycle négatif de la tension de sortie de l'onduleur, le troisième transistor de commutation (Q3) et le quatrième transistor de commutation (Q4) étant complémentaires dans un état marche et dans un état arrêt, le deuxième transistor de commutation (Q2) restant allumé, le sixième transistor de commutation (Q6) restant allumé, le premier transistor de commutation (Q1) et le cinquième transistor de commutation (Q5) restant éteints.
